Europäisches Patentamt

European Patent Office

Office européen des brevets

(11) Publication number: **0 506 422 A1**

## EUROPEAN PATENT APPLICATION

(21) Application number: **92302660.3**

(22) Date of filing: **26.03.92**

(51) Int. Cl.5: **G02F 1/13**, G02F 1/1343,
H01L 21/266

(30) Priority: **29.03.91 US 677697**

(43) Date of publication of application:
**30.09.92 Bulletin 92/40**

(84) Designated Contracting States:
**DE FR GB**

(71) Applicant: **RAYTHEON COMPANY**
**141 Spring Street**
**Lexington Massachusetts 02173(US)**

(72) Inventor: **Resler, Daniel P.**
**18 Salem Street**
**Wilmington, MA 01887(US)**
Inventor: **Tabatabaie-Alavi, Kamal**
**8 Neponset Avenue**
**Boston, MA 02136(US)**

(74) Representative: **Jackson, David Spence**
**REDDIE & GROSE 16, Theobalds Road**
**London, WC1X 8PL(GB)**

(54) **Optical transmission device having electrodes.**

(57) Optically transparent, conductive electrodes (12) are formed on a semi-insulating gallium arsenide substrate (10) by a blanket ion implantation of a suitable dopant followed by an annealing step to provide an electrically conductive crystalline structure. The electrode pattern is masked via a photoresist (14), and the exposed regions (16) are bombarded by boron ions which damage the ordered crystalline structure. The resulting device has improved interelectrode electric isolation.

*Fig.* 2C

## Background of the Invention

The present invention relates generally to electrooptical devices and, more particularly, to an optical transmission device having a plurality of electrically conductive, optically transparent electrodes formed thereon, and a method of forming the electrodes on such device.

Liquid crystal cells include transparent electrodes on the windows thereof to establish electrical fields within the device which produce desired and controllable modifications to the optical properties of the liquid crystal material. There are currently being developed advanced optical beam steering applications which require a multiplicity of independent electrodes on a single optically transparent substrate. As an example, U.S. Patent No. 4,964,701, "Deflector for an Optical Beam," issued October 23, 1990, to T.A. Dorschner et al., discloses an optical beam steerer including a liquid crystal cell-based phase shifter having a multiplicity of optically transparent, parallel stripe electrodes on one window thereof. Similar requirements exist for a wide range of other electro-optical devices, such as Pockel cell-based modulators and switches.

Currently, the most widely used method of electrode formation on a surface of a plate of transparent material is the deposition of a thin-film conductor such as indium-tin oxide (ITO) or indium oxide $In_2O_3$. Such conductive thin films are inherently lossy in the infrared region due to their high electron concentrations and low carrier mobilities. ITO films a few thousand angstroms thick transmit about 80-90% in the visible range, and a film 200 angstroms thick transmits about 50% at 10.6 $\mu$m (infrared). $In_2O_3$ has been reported as providing 65-80% transmission at 8-12 $\mu$m wavelength with film sheet resistances of 20-50 $\Omega$/square.

A semiconducting material such as germanium can be used as an infrared transparent substrate to establish a uniform electric field in the liquid crystal bulk. The absorption in intrinsic Ge is significantly less than in an indium oxide film. Intrinsic Ge will provide 0.6% loss in a 2 mm thick slab assuming an IR absorption coefficient of 0.3 cm$^{-1}$. However, a complication arises when it is desired to form a pattern of electrodes on a single substrate. The surface resistivity of the material allows unacceptably high leakage currents to flow between the electrodes. The requirement of electrical isolation between electrodes might suggest the standard technique of using back-to-back diodes to isolate the electrodes from one another, e.g., the implantation of n-type electrodes in a p-type substrate. This approach is problematic in that the potentials required to safely back-bias the diodes may induce unwanted reactions in the liquid crystal. Furthermore, the dopants required to form the junctions introduce additional absorption. An alternate solution might be to deposit the semiconductor on an insulating transparent substrate in the required electrode pattern. Difficulties then arise when applying an anti-reflection coating to the substrate due to an almost certain optical index mismatch between the semiconductor electrodes and the substrate.

Ion-implanted electrodes for addressing liquid crystal beam steerers are disclosed in U.S. Patent No. 4,882,235, issued November 21, 1989, to D.P. Resler, and assigned to the same assignee as the present invention. In accordance with a process disclosed in this patent for fabricating optical devices having ion-implanted electrodes, a substrate of optically-transparent, semi-insulating crystalline material such as gallium arsenide is masked to expose an electrode pattern on a surface thereof. The exposed areas are implanted with ions, and a subsequent annealing step produces an ordered crystalline structure in the implanted regions, thereby providing electrical conductivity therein. It has been found that the interelectrode electrical isolation of devices made using this prior art process has been unsatisfactory in some applications.

## Summary of the Invention

It is therefore a primary object of the present invention to provide an improved optical transmission device having a plurality of optically transparent electrodes on a surface thereof.

It is a further object of the present invention to provide such a device wherein the electrodes are spaced apart by regions of high resistance.

These objects and other objects of this invention are obtained generally by providing an optical transmission device comprising a substrate of optically transparent material having a surface, a first portion of the surface having a plurality of electrically conductive regions with an ordered crystalline structure. The substrate also has a second portion of the surface interspacing the plurality of electrically conductive regions, the second portion having damaged crystalline structure.

Further in accordance with the present invention, there is disclosed a method for producing an optical transmission device comprising the steps of: providing a substrate of optically transparent material having a surface thereof having an ordered crystalline structure; and damaging the crystalline structure at selected regions on that surface.

Whereas the interelectrode isolation of devices made in accordance with the teachings of the Resler patent cited earlier have been unsatisfactory in some applications, making it impossible to apply the desired potentials between the electrodes on these devices, the present invention discloses a structure and method of making an optical transmission device having a plurality of optically transparent electrodes on a surface thereof, wherein the interelectrode spacings exhibit improved electrical resistance over what is provided by prior art apparatus and methods.

**Brief Description of the Drawings**

Other features and advantages of the present invention will be more fully understood from the following detailed description of the preferred embodiment, the appended claims, and the accompanying drawings, in which:

FIG. 1 illustrates elements of an optical beam steerer in accordance with the present invention; and

FIGS. 2A through 2D illustrate the steps of a method of fabricating an element of FIG. 1.

**Description of the Preferred Embodiment**

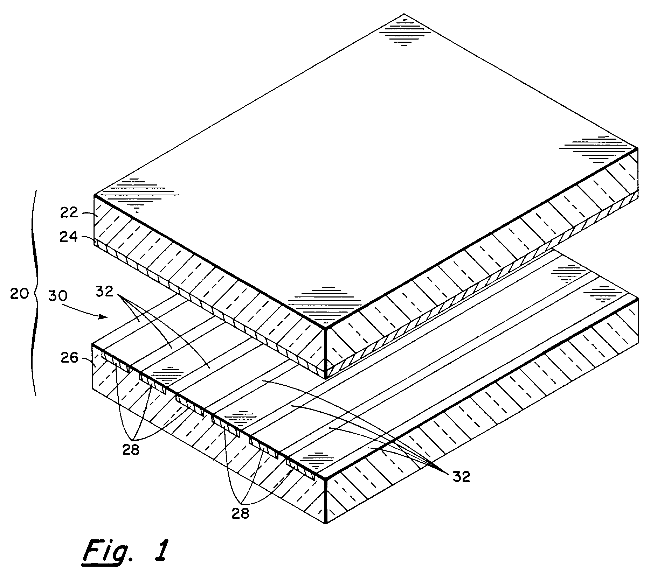

Referring to FIG. 1, there is shown a simplified and dimensionally exaggerated sectional isometric view of elements of a liquid crystal-based optical beam steerer 20. Such a beam steerer 20 may be of the type disclosed in the aforementioned Dorschner et al. patent. These elements include windows 22 and 26, spaced from one another by gap 30, which is typically filled with liquid crystal molecules (not shown). Window 22 is optically transparent at the wavelength of the light of interest, and includes a single electrically conductive region 24 over substantially the entire bottom surface of window 22 to form a common electrode. Window 26 is optically transparent and includes a plurality of electrically conductive stripes 28 separated from one another by electrically insulating regions 32 of the upper surface of window 26.

In accordance with the present invention, the conductive stripes 28 on the upper surface on window 26 are formed by ion implantation followed by an annealing step to produce an electrically conductive, ordered crystalline structure. The nonconductive regions 32 of the upper surface of window 26 are formed by ion bombardment of these selected regions 32 following the above-mentioned annealing step to damage the crystalline structure formed thereby.

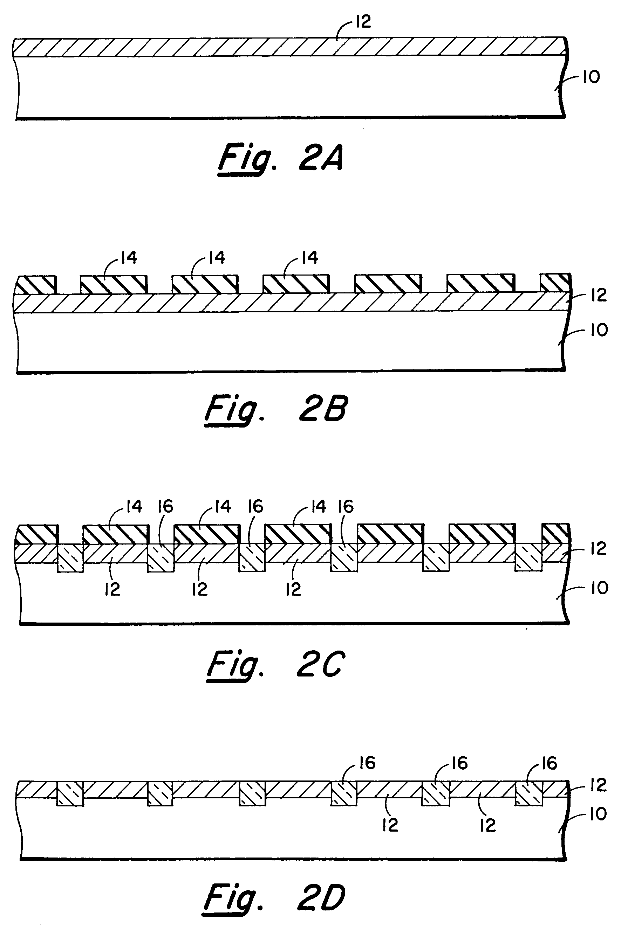

The optical transmission device of the present invention, and a preferred method of making such device, are disclosed in greater detail in the following paragraphs with reference to FIGS. 2A through 2D. An illustrative optical device, which may be similar to cell window 26 (FIG. 1) is fabricated from a slab 10 of optically-transparent, semi-insulating crystalline material such as gallium arsenide (GaAs), typically one inch (2.54 cm) in diameter and one mm thick. Such a thickness of gallium arsenide exhibits very low absorption of light energy in the infrared band of interest here. Gallium arsenide has a high resistivity, on the order of $10^7$ ohm·cm. The semi-insulating properties of crystalline GaAs slab 10 may be obtained by known growth techniques, for example, liquid encapsulated Czochralski (LEC), or it may be doped with chromium using known techniques. Slab 10 is chem-mechanically polished prior to subsequent steps.

The first step following surface preparation of slab 10 is the ion implantation process, during which ions, typically $^{29}$Si ions, bombard the entire surface of slab 10 with an energy of 100 KeV and dosage of $3 \times 10^{13}$ cm$^{-2}$. This process is referred to as blanket implantation, and the result of this process is depicted in FIG. 2A, wherein a region 12 of implanted ions covers the entire upper surface of slab 10. The above-mentioned dosage should provide a sheet resistivity of approximately 100-300 $\Omega$/square following an annealing process.

An annealing step, which follows the ion implantation step, electrically activates the implanted ions of layer 12 in order to cause conductivity by establishing an ordered crystalline structure in the ion-implanted region 12. In the process of the present example, the ion-implanted slab of semi-insulating material is ramped to a maximum temperature of 900°C over a period of approximately two hours, and allowed to cool. The annealing process may illustratively take place in a sealed vessel containing an arsenic overpressure.

Referring now to FIG. 2B, the ion-implanted surface of slab 10 is then coated with a photoresist 14, which may be a photosensitive polymer. In the present example, a positive photoresist, Type 1400-31, sold by the Shipley Co., Newton, Mass., is applied over the ion-implanted surface 12, followed by a heating step at 90°C for three minutes. The coated slab 10 is then hydrated for at least ten minutes, during which time the part cools and absorbs water vapor.

A photomask occults that portion of the coated surface 14 which is intended to comprise the conducting regions of the surface of the optical device, and the coating 14 is then exposed to ultraviolet light for approximately 3.5 seconds. Following exposure, there may be a heating step at 90°C for 20-30 minutes, followed by the development of the photoresist pattern in an alkaline solution for approximately one minute, during which step the exposed photoresist 14, i.e., that region not covered by the mask, is dissolved. Slab 10 is then rinsed in water for approximately one minute.

Referring now to FIG. 2C, the next step is a second ion implantation process during which ions, illustratively boron ions, bombard the prepared surface with an energy of 120 KeV and dosage of $2 \times 10^{12}$ cm$^{-2}$. As is well known, the bombarding ions will implant only in the regions 16 which are not coated with photoresist 14. The above-mentioned ion energy and dosage should be sufficient to penetrate to at least the depth of the ions of the first implantation process and thereby damage the ordered crystalline structure set up by the annealing process on layer 12. Although boron ions are disclosed for use in this implantation process, it will be recognized that any electrically neutral ions may be used.

After implantation, the remaining photoresist 14 is stripped, illustratively in acetone followed by oxygen plasma stripping, leaving the structure depicted in FIG. 2D, comprising an optically transparent, semi-insulating slab 10, having, on a first surface thereof, a plurality of electrodes comprising ion-implanted, annealed regions 12 having an ordered crystalline structure, spaced from one another by a plurality of ion-implanted regions 16 having damaged crystalline structure.

Although it is not shown in the figures, an optional step in the process of producing an electrode for use on an optical transmission device by ion implantation, may involve a metalization step, in which metal (not shown) is deposited on slab 10, in electrical contact with ion-implanted regions 12, to produce bonding pads (not shown) for electrical connection to sources of electrical potential by, for example, ultrasonic bonding. The optional metalization step may be accomplished using convention materials, illustratively, nickel, gold/germanium and gold, and using processes well known by those with ordinary skill in the art.

Using the above process, there is provided optically transparent electrodes 12 on a substrate 10 of optically transparent, semi-insulating crystalline material using a first ion implantation and anneal process to form a conductive crystalline structure, and a second ion implantation process to form electrically nonconductive regions 16, thereby defining electrodes 12. Thus, the electrode region 12, which comprises less than the entire surface of the substrate 10 of crystalline material, exhibits substantially identical optical transmission characteristics as the electrically nonconducting regions 16 of the substrate 10 to radiant energy in the range of infrared wavelengths of interest, illustratively between 9 and 11 $\mu$meters.

While the principles of the present invention have been demonstrated with particular regard to the apparatus and method disclosed herein, it will be recognized that various departures from such disclosed apparatus and method may be undertaken in the practice of the invention. The scope of this invention is not intended to be limited to the apparatus and method disclosed herein but should instead be gauged by the breadth of the claims which follow.

## Claims

1. An optical transmission device comprising:
   a substrate of optically transparent material having a surface, a first portion of said surface having a plurality of electrically conductive regions with an ordered crystalline structure, and said substrate having a second portion of said surface interspacing said plurality of electrically conductive regions, said second portion having damaged crystalline structure.

2. The device according to Claim 1 wherein said substrate comprises a semi-insulating material.

3. The device according to Claim 2 wherein said substrate comprises gallium arsenide.

4. The device according to Claim 1 wherein said ordered crystalline structure of said electrically conductive regions is formed by blanket ion implantation followed by an annealing process.

5. The device according to Claim 4 wherein said ions of said blanket implantation process comprise silicon ions.

6. The device according to Claim 1 wherein said damaged crystalline structure of said second portion interspacing said conductive regions is formed by selective ion implantation.

7. The device according to Claim 1 wherein said damaged crystalline structure of said portion interspacing said conductive regions is formed by masking said surface to cover areas corresponding to said plurality of electrically conductive regions, and implanting ions on uncovered areas of said surface.

8. The device according to Claim 7 wherein said ions of said implanting process are electrically neutral.

9. The device according to Claim 8 wherein said ions comprise boron ions.

10. A method for producing an optical transmission device comprising the steps of:
    (a) providing a substrate of optically transparent material having a surface thereof having an ordered crystalline structure; and
    (b) damaging the crystalline structure at selected regions on said surface.

**11.** The method according to Claim 10 wherein said providing step comprises the substeps of:

    i. implanting ions on substantially an entire surface of a substrate of optically transparent material; and

    ii. annealing said substrate to thereby establish an ordered crystalline structure on said ion-implanted surface.

**12.** The method according to Claim 11 wherein said ions of said implanting substep comprise silicon ions.

**13.** The method according to Claim 10 wherein said damaging step comprises implanting ions on selected regions of said surface.

**14.** The method according to Claim 10 wherein said damaging step comprises the substeps of:

    iii. masking said surface to cover regions corresponding to a plurality of electrodes; and

    iv. implanting ions on uncovered regions of said surface.

**15.** The method according to Claim 14 wherein said ions of said implanting substep are electrically neutral.

**16.** The method according to Claim 15 wherein said ions comprise boron ions.

**17.** A method for producing an optical transmission device having a plurality of electrically conductive regions, said method comprising the steps of:

    (a) implanting ions on a surface of a substrate of optically transparent material;

    (b) annealing said substrate to thereby establish an ordered crystalline structure on said ion-implanted surface; and

    (c) implanting ions on a selected region of said surface to thereby damage the crystalline structure of said surface established by said annealing step.

**18.** A method for producing an optical transmission device having a plurality of electrically conductive regions, said method comprising the steps of:

    (a) implanting ions on a surface of a substrate of optically transparent material;

    (b) annealing said substrate to thereby establish electrical conductivity on said surface;

    (c) masking said surface to cover regions corresponding to said plurality of electrically conductive regions; and

    (d) implanting ions on uncovered regions of said surface.

_Fig. 1_

_12_

_10_

_Fig. 2A_

_14_   _14_   _14_

_12_

_10_

_Fig. 2B_

_14  16_   _14  16_   _14  16_

_12_   _12_   _12_

_12_

_10_

_Fig. 2C_

_16_   _16_   _16_

_12_   _12_

_12_

_10_

_Fig. 2D_

| DOCUMENTS CONSIDERED TO BE RELEVANT | | EP 92302660.3 |

| Category | Citation of document with indication, where appropriate, of relevant passages | Relevant to claim | CLASSIFICATION OF THE APPLICATION (Int. Cl.5) |
|---|---|---|---|
| X | EP - A - 0 331 462 (RAYTHEON COMP.) * Column 5, line 26 - column 8, line 3; claims 1-3, 16-18 * | 1-5, 10-12 | G 02 F 1/13 G 02 F 1/1343 H 01 L 21/266 |
| A | | 17,18 | |
| X | US - A - 4 813 766 (KEENE et al.) * Column 4, line 62 - column 7, line 14 * | 1-5,10 | |
| A | | 11-14, 17,18 | |
| D,A | US - A - 4 964 701 (DORSCHNER et al.) * Column 3, line 32 - column 6, line 8 * | 1-5, 10-14, 17,18 | |
| A | US - A - 4 383 869 (LIU) * Totality * | 10-18 | TECHNICAL FIELDS SEARCHED (Int. Cl.5) G 02 F 1/00 H 01 L 21/00 |

The present search report has been drawn up for all claims

| Place of search | Date of completion of the search | Examiner |
|---|---|---|
| VIENNA | 06-07-1992 | GRONAU |